# FASCICULE DE BREVET EUROPEEN

(11) **EP 4 056 519 B1**
(45) Date de publication et mention de la délivrance du brevet: **20.11.2024**
(21) Numéro de dépôt: 22161563.6
(22) Date de dépôt: 11.03.2022
(51) Int. Cl.: B66C 23/52, B66C 23/84

(54) **GRUE, EN PARTICULIER POUR APPLICATION OFFSHORE**
KRAN, INSBESONDERE FÜR OFFSHORE-EINSATZ
CRANE, IN PARTICULAR FOR OFFSHORE APPLICATION

(30) Priorité: 12.03.2021 FR 2102455
(43) Date de publication de la demande: 14.09.2022
(60) Demande divisionnaire: 24203064.1
(73) Titulaire: REEL, 69450 Saint-Cyr au Mont d'Or (FR)
(72) Inventeur: KONATE, Karamoko, 17220 SAINT-ROGATIEN (FR); BURGER, Bart, 2153BJ NIEUW-VENNEP (NL)
(74) Mandataire: Jacobacci Coralis Harle

(56) Documents cités:
- WO-A2-2014/101910
- CN-A- 101 343 021
- FR-A1- 2 950 315
- GB-A- 2 177 374
- US-B2- 8 540 092

## Description

### Domaine technique de l'invention

La présente invention concerne le domaine technique des grues, avantageusement pour le levage d'une charge supérieure à 20 tonnes, en particulier pour application offshore.

### Etat de la technique

En application offshore, la plupart des grues de levage lourd sont assemblées avec le navire par le biais d'une connexion pivotante. Cet assemblage pivotant permet à la grue de tourner par rapport au navire. C'est ce qu'on appelle le mouvement de rotation ou « slewing motion ».

Ce degré de liberté en rotation permet à la grue de couvrir une grande surface du pont et de déplacer le crochet vers l'extérieur.

Les grues de levage lourd utilisent alors le navire comme contrepoids et transfèrent donc une très grande charge à travers la connexion pivotante.

Les charges manutentionnées en mer devenant de plus en plus importantes (aussi bien en poids qu'en hauteur), les charges transférées au travers de la connexion pivotante sont également accrues.

Dans une telle connexion pivotante, trois types de charges sont transférés.

Le poids de la grue et le poids de la charge introduisent une charge axiale sur la connexion pivotante.

La distance de la charge par rapport au centre de la grue crée un moment de flexion. La distance entre le centre de gravité du poids de la grue et l'axe de rotation contribue également à ce moment de flexion.

Les charges latérales générées par le roulis, le tangage et le vent créent une charge radiale sur la connexion pivotante.

Les grues de levage lourd utilisent alors différentes technologies pour autoriser le mouvement de rotation tout en résistant à ces différentes charges.

Une première solution, traditionnelle, utilise des bogies (essieux montés sur chacun des quatre coins de la grue) pour transférer la charge sur un rail circulaire côté bateau.

Une deuxième solution s'appuie sur les roulements d'orientation, qui sont devenus suffisamment grands pour desservir également une partie du segment des charges lourdes ; une telle solution est par exemple décrite dans le document US-8 540 092. Il s'agit toutefois d'une solution très coûteuse car elle nécessite une extrême précision d'usinage sur de très grandes pièces et de très grandes surfaces.

Une troisième solution consiste en des grues à mat, ou « mast cranes », dans lesquelles la charge est répartie sur deux paliers : un premier pallier implanté au point de connexion de la flèche et un second pallier implanté au point de connexion des câbles de relevage.

L'avantage de cette technologie est la réduction des charges par roulement, ce qui la rend plus rentable et moins encombrante (plate-forme).

Cependant, il existe une relation entre la longueur de la flèche et la hauteur du mât, ce qui conduit à des mâts très hauts pour les grues à flèche longue. La hauteur du mât au-dessus de l'eau rend impossible le franchissement de ponts dans les principales voies maritimes, comme le Bosphore.

Le document CN 101 343 021 divulgue une grue selon le préambule de la revendication 1.

### Présentation de l'invention

Afin de remédier à l'inconvénient précité de l'état de la technique, la présente invention propose une nouvelle structure de grue, avantageusement pour le levage d'une charge supérieure à 20 tonnes, en particulier pour application offshore.

La grue selon l'invention comprend :
- une flèche, et
- une structure support, destinée à porter ladite flèche.

La structure support comprend :
- un piédestal, formant stator, et
- un châssis porteur, formant rotor, portant ladite flèche et logé dans ledit piédestal,
- des moyens paliers pour l'assemblage entre ledit piédestal et ledit châssis porteur, définissant un axe de rotation dudit châssis porteur par rapport audit piédestal, avantageusement un axe de rotation vertical,
- des moyens de manoeuvre en rotation, adaptés à piloter la rotation dudit châssis porteur autour dudit axe de rotation, lesdites moyens paliers sont répartis sur la hauteur de ladite structure support et comprennent :
   - des moyens paliers supérieurs, situés du côté de la flèche et avantageusement au niveau d'une extrémité supérieure dudit piédestal, et
   - des moyens paliers inférieurs, situés sous les moyens paliers supérieurs et avantageusement au niveau d'une extrémité inférieure du châssis porteur.

Les moyens paliers supérieurs comprennent un roulement à contact radial comprenant :
- des éléments roulants, et
- un chemin de roulement cylindrique, lisse, coaxial à l'axe de rotation,

ledit roulement à contact radial autorisant un degré de liberté en translation longitudinal desdits éléments roulants sur la hauteur dudit chemin de roulement
cylindrique, lequel roulement à contact radial comprend des éléments roulants choisis parmi des rouleaux cylindriques, répartis sur au moins une rangée, U les moyens paliers inférieurs comportent un roulement à contact radial, et un palier de butée.

Selon l'invention, les rouleaux cylindriques sont reliés pour former au moins une chaîne de rouleaux cylindriques ; les moyens paliers supérieurs comportent plusieurs modules de roulement comportant chacun au moins une chaîne de rouleaux cylindriques et, au sein de chaque module de roulement, la chaîne de rouleaux cylindriques forme une chaîne de rouleaux cylindriques recirculant qui comportant un brin actif coopérant avec le chemin de roulement cylindrique, et un brin retour, lesquels modules de roulement sont répartis sur la circonférence de l'axe de rotation ;
- le roulement à contact radial consiste en un roulement à rotule, le palier de butée consiste en un roulement à rouleaux concaves coniques, et ledit roulement à rotule et ledit roulement à rouleaux coniques comportent un point central commun (C3) traversé par l'axe de rotation.

La solution technique selon l'invention a l'intérêt d'offrir, de manière surprenante et inattendue, un guidage efficace du mouvement de rotation tout en résistant aux différentes charges.

En particulier, les moyens paliers supérieurs autorisent une certaine déformation du châssis porteur sous l'effet des différentes charges tout en maintenant un guidage optimal en rotation. Cette solution selon l'invention présente en plus l'intérêt d'offrir une compacité optimale avec, pour une même capacité, un diamètre inférieur par rapport à une couronne d'orientation.

D'autres caractéristiques non limitatives et avantageuses du produit conforme à l'invention, prises individuellement ou selon toutes les combinaisons techniquement possibles, sont les suivantes :
- ledit roulement à contact radial comprend des éléments roulants choisis parmi des rouleaux cylindriques, répartis sur au moins une rangée, ou une série de roues, par exemple sous forme de chariots ou de bogies ;
- les éléments roulants sont portés par le châssis porteur, et le chemin de roulement cylindrique est porté par le piédestal et est orienté vers l'axe de rotation ;
- les moyens paliers inférieurs comportent un roulement à contact radial, sus-jacent, et un palier de butée, sous-jacent les moyens paliers inférieurs comportent avantageusement un point central sphérique, de sorte à obtenir un seul point d'articulation ; le roulement à contact radial consiste en un roulement à rotule, chois parmi les roulements à rotule sur rouleaux ou un palier de friction à rotule ;
- les moyens de manoeuvre en rotation sont implantés au niveau des moyens paliers inférieurs ;
- ladite grue est une grue terrestre ou une grue offshore.

La présente invention concerne encore un engin pour application offshore, équipé d'une grue selon l'invention, par exemple un navire pour service d'opération en parc éolien (wind farm Service Operation Vessels - SOVs).

L'engin consiste avantageusement en un navire, dans lequel le piédestal est fixé sur un pont dudit engin, faisant saillie au-dessus dudit pont. Les moyens paliers supérieurs se situent au-dessus dudit pont et les moyens paliers inférieurs se situent au-dessus, au niveau ou au-dessous dudit pont.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### Description détaillée de l'invention

De plus, diverses autres caractéristiques de l'invention ressortent de la description annexée effectuée en référence aux dessins qui illustrent des formes, non limitatives, de réalisation de l'invention et où :
[Fig. 1] est une vue schématique et en perspective, illustrant un navire équipé d'une grue selon l'invention ;
[Fig. 2] est une vue schématique et en perspective de la grue selon l'invention, isolé du navire ;
[Fig. 3] est une vue schématique et partielle de la grue selon l'invention, illustrant sa structure support ;
[Fig. 4] est une autre vue schématique et partielle de la grue selon l'invention, illustrant sa structure support ;
[Fig. 5] est une vue schématique et partielle de la grue selon l'invention, illustrant la structure des éléments roulants constitutifs des moyens paliers supérieurs ;
[Fig. 6] est une vue schématique et en perspective d'un module de roulement constitutif des éléments roulants selon la figure 5 ;
[Fig. 7] est une vue schématique et en coupe d'un module de roulement constitutif des éléments roulants selon la figure 5 ;
[Fig. 8] est une vue schématique et en coupe des moyens paliers inférieurs.

Il est à noter que, sur ces figures, les éléments structurels et/ou fonctionnels communs aux différentes variantes peuvent présenter les mêmes références.

La grue 1, telle que représentée sur les figures, consiste avantageusement en une grue pour le levage d'une charge supérieure à 20 tonnes (par exemple supérieure à 400 tonnes et jusqu'à au moins 10 000 tonnes, voire plus), en particulier pour application offshore (« offshore heavy lift »).

De manière générale, la grue 1 est avantageusement une grue terrestre ou une grue offshore.

De préférence, la grue 1 est dépourvue de contrepoids sur la partie rotative destinés à minimiser le transfert de moment de flexion.

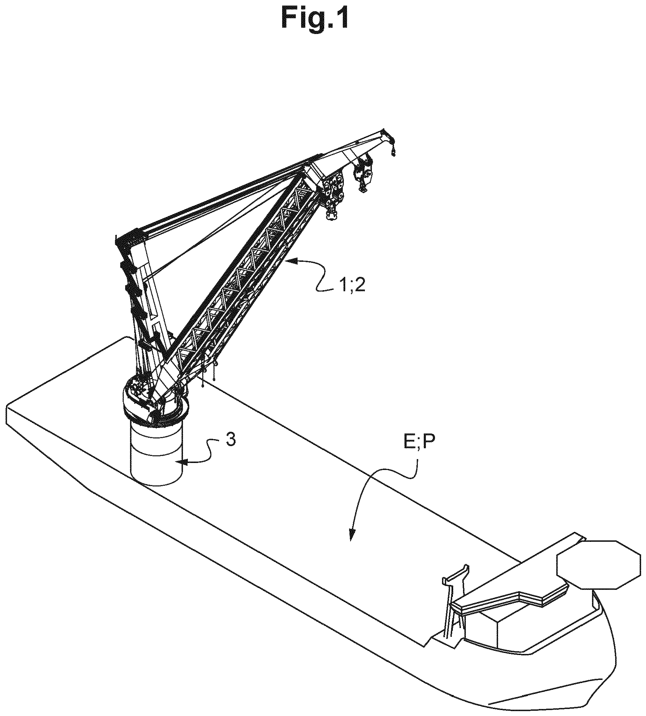

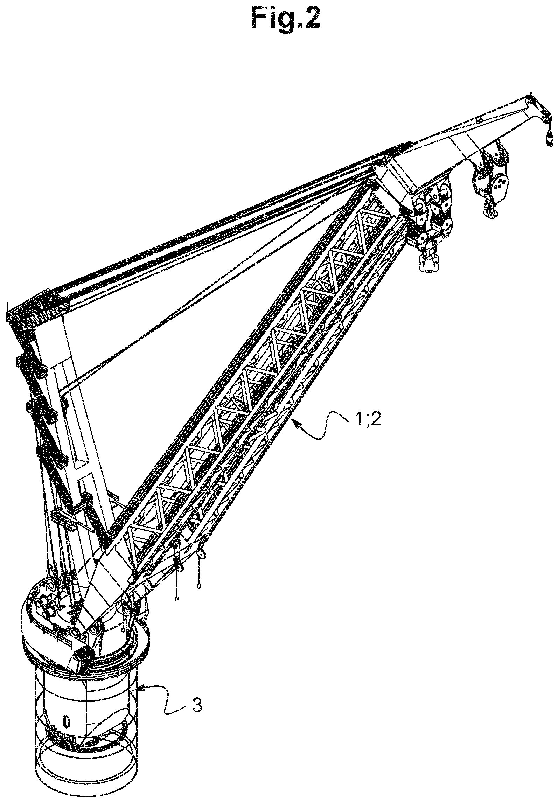

Tel que représenté de manière générale sur les figures 1 à 3, la grue 1 comprend :
- une flèche 2, et
- une structure support 3, destinée à porter cette flèche 2.

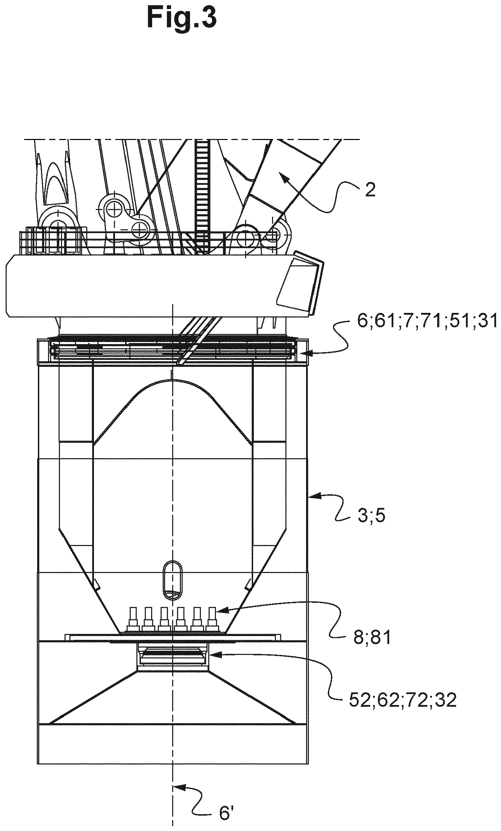

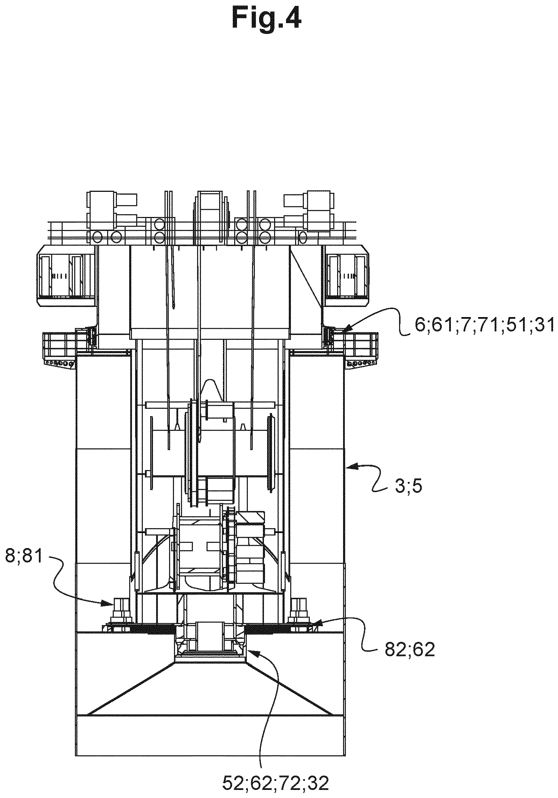

Comme illustré sur les figures 3 et 4, la structure support 3 comprend :
- un piédestal 5, formant stator, et
- un châssis porteur 6, formant rotor, portant la flèche 2 et logé dans le piédestal 5.

Le piédestal 5 présente avantageusement une structure tubulaire ou une structure en fût (mâle), dans laquelle est rapporté / emmanché le châssis porteur 6 (femelle).

Le piédestal 5 comporte avantageusement deux extrémités (figure 3) :
- une extrémité supérieure 51, située du côté de la flèche 2, et
- une extrémité inférieure 52, opposée.

La châssis porteur 6 forme ici un insert, rapporté / emmanché dans le piédestal 5.

Le châssis porteur 6 comporte avantageusement deux extrémités (figure 3) :
- une extrémité supérieure 61, portant la flèche 2, et
- une extrémité inférieure 62, opposée.

La structure support 3 comporte encore deux extrémités :
- une extrémité supérieure 31, située du côté de la flèche 2, et
- une extrémité inférieure 32, opposée.

La structure support 3 comprend encore des moyens paliers 7 pour l'assemblage entre le piédestal 5 et le châssis porteur 6.

Les moyens paliers 7 définissent un axe de rotation 6' du châssis porteur 6 (et ainsi de la flèche 2), par rapport au piédestal 5, avantageusement un axe de rotation 6' vertical.

La structure support 3 comprend également des moyens de manoeuvre en rotation 8, adaptés à piloter la rotation du châssis porteur 6 autour de son axe de rotation 6'.

De préférence, les moyens de manoeuvre en rotation 8 consistent en une combinaison de moteurs 81, synchronisés entre eux, qui sont portés par le piédestal 5, et qui pilote la rotation du châssis porteur 6 par rapport au piédestal 5 (figure 3).

Les moteurs 81 sont avantageusement répartis sur une partie de la circonférence du piédestal 5.

Et, selon l'invention, tel que décrit ci-après en relation avec les figures 3 et suivantes, les moyens paliers 7 sont répartis sur la hauteur de la structure support 3.

En l'espèce, les moyens paliers 7 comprennent :
- des moyens paliers supérieurs 71, situés du côté de la flèche 2 et avantageusement au niveau de l'extrémité supérieure 51 du piédestal 5, et
- des moyens paliers inférieurs 72, situés sous les moyens paliers supérieurs 71 et avantageusement au niveau de l'extrémité inférieure 62 du châssis porteur 6.

De préférence, la construction totale des moyens paliers 7 est déterminée statiquement (donc non hyperstatique).

De préférence encore, la charge axiale est transférée à travers la construction des moyens paliers inférieurs 72. Le moment est transféré à la fois par les moyens paliers supérieurs 71 et inférieurs 72.

Les moyens paliers supérieurs 71 et inférieurs 72 peuvent être soit des roulements à rouleaux, soit des roulements à glissement, en métal ou en matière synthétique.

Les moyens paliers supérieurs 71 se situent avantageusement au niveau de l'extrémité supérieure 51 du piédestal 5 (au sommet du piédestal 5). Ils sont avantageusement rapportés entre l'extrémité supérieure 51 du piédestal 5 et l'extrémité supérieure 61 du châssis porteur 6.

En d'autres termes encore, les moyens paliers supérieurs 71 se situent avantageusement au niveau du point pivot de la flèche 2.

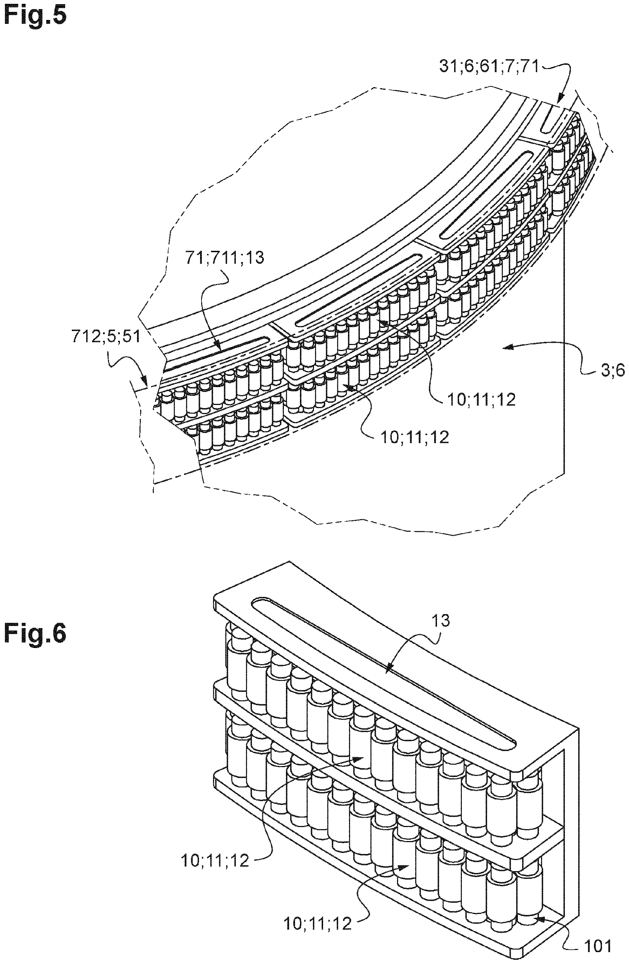

Tel qu'illustré notamment sur la figure 5, les moyens paliers supérieurs 71 comprennent un roulement à contact radial 71 (désigné par le même repère 71 dans un souci de simplification) comprenant :
- des éléments roulants 711, et
- un chemin de roulement cylindrique 712, lisse, coaxial à l'axe de rotation 6'.

Et le roulement à contact radial 71 autorise un degré de liberté en translation longitudinal des éléments roulants 711 sur la hauteur du chemin de roulement cylindrique 712.

Par « degré de liberté en translation longitudinal », dit encore « degré de liberté en translation axial », les éléments roulants 711 sont aptes à se déplacer selon une direction coaxiale à l'axe de rotation 6' du châssis porteur 6 (avantageusement verticalement), en translation par rapport au chemin de roulement cylindrique 712 fixe.

Le plan général des éléments roulants 711, perpendiculaire à l'axe de rotation 6', est ainsi mobile sur la hauteur du chemin de roulement cylindrique 712 (entre ces extrémités supérieure et inférieure, opposées).

Par « hauteur », on entend avantageusement une cote mesurée parallèlement à l'axe de rotation 6'.

Le degré de liberté en translation longitudinal des éléments roulants 711 est avantageusement de 0,5 à 5 cm.

La hauteur du chemin de roulement cylindrique 712 est ainsi supérieure à la hauteur des éléments roulants 711.

En d'autres termes, lorsque la grue 1 est soumise à des charges, en particulier un mouvement de flexion et/ou une charge axiale, les éléments roulants 711 sont autorisés à se déplacer (ici verticalement) sur la hauteur du chemin de roulement cylindrique 712, tout au maintenant un guidage optimal en rotation.

Le chemin de roulement cylindrique 712 consiste avantageusement en un tronçon tubulaire, à section circulaire, adapté à servir de surface de roulement pour les éléments roulants 711 lors de la rotation du châssis porteur 6 (et ainsi de la flèche 2), par rapport au piédestal 5.

Ce chemin de roulement cylindrique 712 est avantageusement coaxial à l'axe de rotation 6' du châssis porteur 6.

Les éléments roulants 711 sont choisis avantageusement parmi des rouleaux cylindriques 10, répartis sur au moins une rangée 11 (ou couronne).

Chaque rouleaux cylindrique 10 comporte ici un axe longitudinal 10', formant son axe de rotation et s'étendant parallèlement à l'axe de rotation 6' du châssis porteur 6.

Une rangée 11 de rouleaux cylindriques 10 s'étend avantageusement dans un plan perpendiculaire à l'axe de rotation 6'.

En l'espèce, les éléments roulants 711 sont répartis sur deux rangées 11 (ou couronnes) superposées.

Les rouleaux cylindriques 10 sont avantageusement reliés (au niveau de leurs extrémités longitudinales) pour former au moins une chaîne 12 de rouleaux cylindriques 10.

Ces rouleaux cylindriques 10 sont avantageusement reliés par des maillons 101, pour maintenir l'écartement entre les rouleaux cylindriques 10 successifs (figure 6).

En l'espèce, les éléments roulants 711 comportent avantageusement plusieurs modules de roulement 13 comportant chacun au moins une chaîne 12 de rouleaux cylindriques 10.

Chaque module de roulement 13 comporte ici deux chaînes 12 de rouleaux cylindriques 10 superposées.

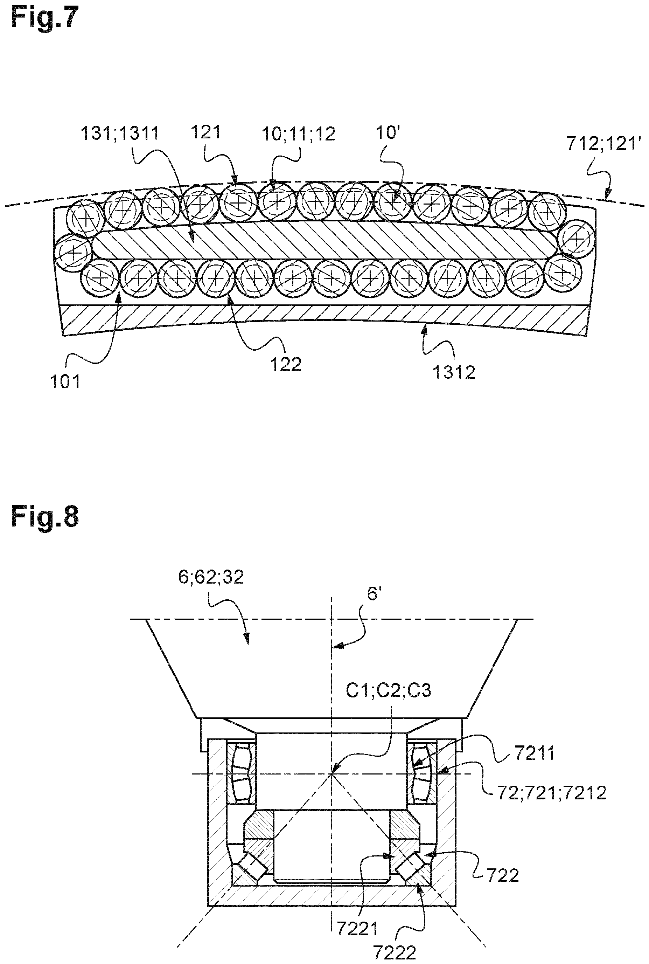

Au sein de chaque module de roulement 13 et tel qu'illustré sur la figure 7, la chaîne 12 de rouleaux cylindriques 10 consiste en une chaîne 12 de rouleaux cylindriques 10 recirculant comportant :
- un brin actif 121 coopérant avec le chemin de roulement cylindrique 712, et
- un brin retour 122.

En l'espèce, le brin actif 121 définit une surface tangentielle 121' présentant une section en arc de cercle dont le rayon de courbure correspond au chemin de roulement cylindrique 712.

Le brin retour 122 est avantageusement rectiligne.

Pour cela, le module de roulement 13 comporte avantageusement un châssis support 131 comportant deux parties :
- une partie guidage 1311, guidant de la chaîne 12 de rouleaux cylindriques 10 recirculant et définissant la forme des brins 121, 122 de la chaîne 12 de rouleaux cylindriques 10 recirculant, et
- une partie montage 1312, ici concave et cylindrique, adaptée à son montage sur la structure support 3.

Les modules de roulement 13 sont répartis, en série, sur la circonférence de l'axe de rotation 6', de manière juxtaposée les uns par rapport aux autres.

Les modules de roulement 13, juxtaposés, forment ainsi une sorte de couronne d'éléments roulants 711.

Les brins actifs 121 des modules de roulement 13 définissent ainsi ensemble une surface tangentielle 121' circulaire dont le rayon de courbure correspond au chemin de roulement cylindrique 712.

Les brins actifs 121 des modules de roulement 13 définissent ainsi ensemble une surface tangentielle 121' circulaire qui est concentrique avec l'axe de rotation 6' du châssis porteur 6.

De manière alternative, les éléments roulants 711 sont choisis avantageusement parmi une série de roues (non représentées), par exemple sous forme de chariots ou de bogies.

De manière générale, les éléments roulants 711 sont avantageusement portés par le châssis porteur 6.

Dans le cas de modules de roulement 13, la partie montage 1312 est assemblée avec le châssis porteur 6. Les brins actifs 121 des modules de roulement 13 définissent avantageusement ensemble une surface tangentielle 121' circulaire, intérieure, orientée vers la périphérie.

Les brins actifs 121 des modules de roulement 13 définissent ainsi ensemble une surface tangentielle 121' circulaire, intérieure, orientée à l'opposé de l'axe de rotation 6'.

Et le chemin de roulement cylindrique 712, extérieur, est porté par le piédestal 5 et est orienté vers l'axe de rotation 6'.

Encore de manière générale, les moyens paliers inférieurs 72 se situent avantageusement au niveau de l'extrémité inférieure 62 du châssis porteur 6. Ils sont avantageusement rapportés entre l'extrémité inférieure 52 du piédestal 5 et l'extrémité inférieure 62 du châssis porteur 6.

Les moyens paliers inférieurs 72 peuvent être constitués d'un ou plusieurs roulements / paliers, ayant un point central sphérique C3, de sorte à obtenir un seul point d'articulation.

Les moyens paliers inférieurs 72 comportent avantageusement :
- un roulement à contact radial 721, avantageusement sus-jacent, et
- un palier de butée 722, avantageusement sous-jacent.

Cette combinaison est intéressante en ce qu'elle permet une prise en charge optimale des efforts : l'effort radial est pris en charge par le roulement à contact radial 721 et l'effort axial est pris en charge par le palier de butée 722.

Le roulement à contact radial 721 consiste avantageusement en un roulement à rotule 721, avantageusement choisi parmi les roulements à rotule sur rouleaux ou un palier de friction à rotule.

Par exemple, un roulement à rotule sur rouleaux comporte deux rangées de rouleaux, une piste de roulement sphérique commune dans la bague extérieure 7212 et deux pistes dans des gorges continues sur la bague intérieure 7211.

De manière générale, le roulement à rotule 721 accepte ainsi un déversement relatif, mouvement de la bague intérieure 7211 (rondelle-arbre) par rapport à la bague extérieure 7212 (rondelle-logement), perpendiculairement à l'axe de rotation 6'.

Par exemple, l'angle de déversement admissible est de 1,5° à 2°.

Le roulement à rotule 721 définit ainsi un point central C1, traversé par l'axe de rotation 6'.

Le palier de butée 722 consiste avantageusement en un roulement à rouleaux concaves coniques.

Ce roulement à rouleaux concaves coniques 722 définit également un point central C2, correspondant au sommet du cône défini par une directrice perpendiculaire à l'axe de rotation des rouleaux, traversé par l'axe de rotation 6'.

Par exemple, le roulement à rouleaux concaves coniques 722 comporte une rangée de rouleaux, une piste de roulement tronconique (divergeant du bas vers le haut) dans la bague intérieure 7221 et une piste dans une gorge continue tronconique (avantageusement parallèle) sur la bague extérieure 7222.

Le palier de butée 722 assure le maintien du châssis porteur 6 dans le sens axial et évite tout déplacement de long de son axe.

Les points centraux C1 et C2 sont avantageusement confondus, définissant un point central commun C3 correspondant au point central sphérique C3.

Le point central commun C3 est avantageusement traversé par l'axe de rotation 6'.

De manière générale, les moyens de manoeuvre en rotation 8 sont avantageusement implantés au niveau des moyens paliers inférieurs 72 précités.

Les moteurs 81 des moyens de manoeuvre en rotation 8 coopèrent avantageusement avec une roue dentée 82 équipant l'extrémité inférieure 62 du châssis porteur 6 (figure 4).

De manière générale, tel que représenté sur la figure 1, la grue 1 équipe avantageusement un engin E pour application offshore, par exemple un navire pour service d'opération en parc éolien (« wind farm Service Operation Vessels » ou SOVs).

Dans le cas d'un navire (figure 1), le piédestal 5 est avantageusement fixé sur un pont P de l'engin E, faisant saillie au-dessus de ce pont P.

Et les moyens paliers supérieurs 71 se situent au-dessus de ce pont P.

Les moyens paliers inférieurs 72 peuvent présenter différentes localisations par rapport à ce pont P.

Les moyens paliers inférieurs 72 peuvent se situer :
- au-dessus dudit pont P,
- au niveau dudit pont P, ou
- au-dessous dudit pont P.

De manière générale, la grue 1 selon l'invention présente différents avantages :
- les moyens paliers sont plus petits en diamètre que les solutions de l'art antérieur, ce qui réduit l'encombrement de la grue et augmente ainsi l'espace de pont pour la cargaison ;
- la connexion boulonnée, qui est utilisée dans une construction à palier pivotant unique, est éliminée ; le risque associé à cette connexion, considérée comme une préoccupation majeure, est donc éliminé ;
- la hauteur du piédestal est inférieure à la hauteur du mât d'une grue à mât (mast crane) et le piédestal peut être plus facilement démonté pour être encore plus bas, ce qui permet au navire de passer les ponts dans les principales voies maritimes, comme le Pont du Bosphore à l'entrée de la mer Noire ;
- la construction des moyens paliers a un coût inférieur et une meilleure productibilité qu'une solution de roulement simple ;
- les moyens paliers sont situés à l'intérieur du piédestal, entre la châssis porteur et le piédestal ; les moyens paliers se trouvent ainsi dans un environnement protégé plutôt qu'en mer ouverte, ce qui est le cas pour les grues à bogie et à mât.

Bien entendu, diverses autres modifications peuvent être apportées à l'invention dans le cadre des revendications annexées.

## Revendications

1. Grue, avantageusement pour le levage d'une charge supérieure à 20 tonnes, en particulier pour application offshore,
laquelle grue comprend :
- une flèche (2),
- une structure support (3), destinée à porter ladite flèche (2),
laquelle structure support (3) comprend :
- un piédestal (5), formant stator, et
- un châssis porteur (6), formant rotor, portant ladite flèche (2) et logé dans ledit piédestal (5),
- des moyens paliers (7) pour l'assemblage entre ledit piédestal (5) et ledit châssis porteur (6), définissant un axe de rotation (6') dudit châssis porteur (6) par rapport audit piédestal (5), avantageusement un axe de rotation (6') vertical,
- des moyens de manoeuvre en rotation (8), adaptés à piloter la rotation dudit châssis porteur (6) autour dudit axe de rotation (6'), dans laquelle lesdites moyens paliers (7) sont répartis sur la hauteur de ladite structure support (3) et comprennent :
- des moyens paliers supérieurs (71), situés du côté de la flèche (2) et avantageusement au niveau d'une extrémité supérieure (51) dudit piédestal (5), et
- des moyens paliers inférieurs (72), situés sous les moyens paliers supérieurs (71) et avantageusement au niveau d'une extrémité inférieure (62) du châssis porteur (6), lesquels moyens paliers supérieurs (71) comprennent un roulement à contact radial (71) comprenant :
- des éléments roulants (711), et
- un chemin de roulement cylindrique (712), lisse, coaxial à l'axe de rotation (6'),
ledit roulement à contact radial (71) autorisant un degré de liberté en translation longitudinal desdits éléments roulants (711) sur la hauteur dudit chemin de roulement cylindrique (712),
lequel roulement à contact radial (71) comprend des éléments roulants (711) choisis parmi des rouleaux cylindriques (10), répartis sur au moins une rangée (11),
lesquels moyens paliers inférieurs (72) comportent : U
- un roulement à contact radial (721), et U
- un palier de butée (722), U
**caractérisée en ce que** les rouleaux cylindriques (10) sont reliés pour former au moins une chaîne (12) de rouleaux cylindriques (10),
lesquels moyens paliers supérieurs (71) comportent plusieurs modules de roulement (13) comportant chacun ladite au moins une chaîne (12) de rouleaux cylindriques (10), **en ce que**, au sein de chaque module de roulement (13), la chaîne (12) de rouleaux cylindriques (10) forme une chaîne (12) de rouleaux cylindriques (10) recirculant qui comporte :
- un brin actif (121) coopérant avec le chemin de roulement cylindrique (712), et
- un brin retour (122),
lesquels modules de roulement (13) sont répartis sur la circonférence de l'axe de rotation (6'),
lequel roulement à contact radial (721) consiste en un roulement à rotule (721),
**en ce que** le palier de butée (722) consiste en un roulement à rouleaux concaves coniques, et
**en ce que** ledit roulement à rotule (721) et ledit roulement à rouleaux coniques (722) comportent un point central commun (C3) traversé par l'axe de rotation (6').

2. Grue, selon la revendication 1, **caractérisée en ce que** les moyens paliers inférieurs (72) comportent :
- un roulement à contact radial (721), sus-jacent, et
- un palier de butée (722), sous-jacent.

3. Grue, selon l'une quelconque des revendications 1 ou 2, **caractérisée en ce que** le roulement à contact radial (721) consiste en un roulement à rotule (721) choisi parmi les roulements à rotule sur rouleaux ou un palier de friction à rotule.

4. Grue, selon l'une quelconque des revendications 1 à 3, **caractérisée en ce que** les éléments roulants (711) sont portés par le châssis porteur (6), et
**en ce que** le chemin de roulement cylindrique (712) est porté par le piédestal (5) et est orienté vers l'axe de rotation (6').

5. Grue, selon l'une quelconque des revendications 1 à 4, **caractérisée en ce que** les moyens paliers inférieurs (72) comportent un point central sphérique (C3), de sorte à obtenir un seul point d'articulation.

6. Grue, selon l'une quelconque des revendications 1 à 5, **caractérisée en ce que** les moyens de manoeuvre en rotation (8) sont implantés au niveau des moyens paliers inférieurs (72).

7. Grue, selon l'une quelconque des revendications 1 à 6, **caractérisée en ce que** ladite grue (1) est une grue terrestre ou une grue offshore.

8. Engin pour application offshore, équipé d'une grue (1) selon l'une quelconque des revendications 1 à 7, par exemple un navire pour service d'opération en parc éolien.

9. Engin selon la revendication 8, consistant en un navire, dans lequel le piédestal (5) est fixé sur un pont (P) dudit engin (E), faisant saillie au-dessus dudit pont (P),
en ce que les moyens paliers supérieurs (71) se situent au-dessus dudit pont (P),
et en ce que les moyens paliers inférieurs (72) se situent au-dessus, au niveau ou au-dessous dudit pont (P).

## Patentansprüche

1. Kran, vorteilhafterweise für das Heben einer Last von mehr als 20 t, insbesondere für Offshore-Einsatz,
wobei der Kran
- einen Ausleger (2),
- eine Stützkonstruktion (3), die dazu bestimmt ist, den Ausleger (2) zu tragen, aufweist,
wobei die Stützkonstruktion (3)
- einen Sockel (5), der einen Stator bildet, und
- ein Traggestell (6), das einen Rotor bildet, den Ausleger (2) trägt und in dem Sockel (5) angeordnet ist,
- Lagermittel (7) für den Zusammenbau des Sockels (5) mit dem Traggestell (6), die eine Drehachse (6') des Traggestells (6) in Bezug auf den Sockel (5), vorzugsweise eine senkrechte Drehachse (6'), definieren,
- Mittel (8) für eine Drehbewegung, die dazu ausgelegt sind, die Drehung des Traggestells (6) um die Drehachse (6') zu steuern,
aufweist,
wobei die Lagermittel (7) über die Höhe der Stützkonstruktion (3) verteilt sind und
- obere Lagermittel (71), die auf der Seite des Auslegers (2) und vorteilhafterweise auf Höhe eines oberen Endes (51) des Sockels (5) angeordnet sind, und
- untere Lagermittel (72), die unterhalb der oberen Lagermittel (71) und vorteilhafterweise auf Höhe eines unteren Endes (62) des Traggestells (6) angeordnet sind,
aufweisen,
wobei die oberen Lagermittel (71) ein Rollenlager (71) mit radialem Kontakt aufweisen, das
- rollende Elemente (711) und
- eine glatte, zur Drehachse (6') koaxiale zylindrische Laufbahn (712) aufweist,
wobei das Rollenlager (71) mit radialem Kontakt einen längs gerichteten translatorischen Freiheitsgrad der rollenden Elemente (711) über die Höhe der zylindrischen Laufbahn (712) ermöglicht,
wobei das Rollenlager (71) mit radialem Kontakt rollende Elemente (711) aufweist, die aus in mindestens einer Reihe (11) angeordneten zylindrischen Rollen (10) ausgewählt sind,
wobei die unteren Lagermittel (72)
- ein Rollenlager (721) mit radialem Kontakt und
- ein Widerlager (722)
aufweisen,
**dadurch gekennzeichnet,**
**daß** die zylindrischen Rollen (10) miteinander verbunden sind, um mindestens eine Kette (12) aus zylindrischen Rollen (10) zu bilden,
wobei die oberen Lagermittel (71) mehrere Rollmodule (13) aufweisen, von denen jedes die besagte mindestens eine Kette (12) aus zylindrischen Rollen (10) aufweist, daß innerhalb jedes Rollmoduls (13) die Kette (12) aus zylindrischen Rollen (10) eine umlaufende Kette (12) aus zylindrischen Rollen (10) bildet, die
- einen mit der zylindrischen Laufbahn (712) zusammenwirkenden aktiven Zweig (121) und
- einen Rückzweig (122)
aufweist,
wobei die Rollmodule (13) über den Umfang der Drehachse (6') verteilt sind,
wobei das Rollenlager (721) mit radialem Kontakt aus einem Pendelrollenlager (721) besteht,
**daß** das Widerlager (722) aus einem Rollenlager mit konischen konkaven Rollen besteht, und
**daß** das Pendelrollenlager (721) und das Lager mit konischen Rollen (722) einen von der Drehachse (6') durchquerten gemeinsamen zentralen Punkt (C3) aufweisen.

2. Kran gemäß Anspruch 1, **dadurch gekennzeichnet, daß** die unteren Lagermittel (72)
- ein darüberliegendes Rollenlager (721) mit radialem Kontakt und
- ein darunterliegendes Widerlager (722)
aufweisen.

3. Kran gemäß einem der Ansprüche 1 oder 2, **dadurch gekennzeichnet, daß** das Rollenlager (721) mit radialem Kontakt aus einem Pendelrollenlager (721) besteht, das aus den Pendelrollenlagern auf Rollen oder einem Pendelreiblager ausgewählt ist.

4. Kran gemäß einem der Ansprüche 1 bis 3, **dadurch gekennzeichnet, daß** die rollenden Elemente (711) vom Traggestell (6) getragen werden und
daß die zylindrische Laufbahn (712) vom Sockel (5) getragen wird und zur Drehachse (6') hin gerichtet ist.

5. Kran gemäß einem der Ansprüche 1 bis 4, **dadurch gekennzeichnet, daß** die unteren Lagermittel (72) einen kugelförmigen zentralen Punkt (C3) aufweisen, um einen einzigen Gelenkpunkt zu erhalten.

6. Kran gemäß einem der Ansprüche 1 bis 5, **dadurch gekennzeichnet, daß** die Mittel (8) zur Drehbetätigung an den unteren Lagermitteln (72) angeordnet sind.

7. Kran gemäß einem der Ansprüche 1 bis 6, **dadurch gekennzeichnet, daß** der Kran (1) ein Kran auf festem Grund oder ein Offshore-Kran ist.

8. Maschine für einen Offshore-Einsatz, die mit einem Kran gemäß einem der Ansprüche 1 bis 7 ausgestattet ist, zum Beispiel ein Schiff für Einsätze in einem Windpark.

9. Maschine gemäß Anspruch 8, die aus einem Schiff besteht, wobei der Sockel (5) auf einer Brücke (P) der Maschine (E) befestigt ist und oberhalb der Brücke (P) herausragt,
wobei sich die oberen Lagermittel (71) oberhalb der Brücke (P) befinden und wobei sich die unteren Lagermittel (72) oberhalb, auf Höhe oder unterhalb der Brücke (P) befinden.

## Claims

1. A crane, advantageously for lifting loads of more than 20 tons, in particular for offshore application,
wherein said crane comprises:
- a boom (2),
- a support structure (3), intended to carry said boom (2),
wherein said support structure (3) comprises:
- a pedestal (5), forming a stator, and
- a carrier frame (6), forming a rotor, carrying said boom (2) and housed within said pedestal (5),
- bearing means (7) for the assembly between said pedestal (5) and said carrier frame (6), defining an axis of rotation (6') of said carrier frame (6) with respect to said pedestal (5), advantageously a vertical axis of rotation (6'),
- rotation operating means (8), adapted to control the rotation of said support frame (6) about said axis of rotation (6'),
wherein said bearing means (7) are distributed over the height of said support structure (3) and comprise:
- upper bearing means (71), located on the side of the boom (2) and advantageously at an upper end (51) of said pedestal (5), and
- lower bearing means (72), located under the upper bearing means (71) and advantageously at a lower end (62) of the carrier frame (6),
wherein said upper bearing means (71) comprise a radial contact rolling bearing (71), comprising:
- rolling elements (711), and
- a smooth cylindrical raceway (712), coaxial to the axis of rotation (6'),
said radial contact rolling bearing (71) allowing a longitudinal translational degree of freedom of said rolling elements (711) along the height of said cylindrical raceway (712),
wherein said radial contact rolling bearing (71) comprises rolling elements (711) selected from cylindrical rollers (10), distributed in at least one row (11),
**characterised in that** the cylindrical rollers (10) are connected to each other to form at least one chain (12) of cylindrical rollers (10),
wherein the upper bearing means (71) include several bearing modules (13) each including at least one chain (12) of cylindrical rollers (10),
and **in that**, within each bearing module (13), the chain (12) of cylindrical rollers (10) forms a chain (12) of recirculating cylindrical rollers (10) that have:
- an active strand (121) cooperating with the cylindrical raceway (712), and
- a return strand (122),
wherein said bearing modules (13) are distributed over the circumference of the axis of rotation (6'),
wherein the lower bearing means (72) include:
- a radial contact rolling bearing (721), and
- a thrust bearing (722),
wherein the radial contact rolling bearing (721) consists of a spherical bearing (721),
**in that** the thrust bearing (722) consists of a concave tapered roller bearing, and
**in that** said spherical bearing (721) and said tapered roller bearing (722) have a common central point (C3) passed through by the axis of rotation (6').

2. The crane according to claim 1, **characterized in that** the lower bearing means (72) include:
- a radial contact rolling bearing (721), overlying, and
- a thrust bearing (722), underlying.

3. The crane according to claims 1 or 2, **characterized in that** the radial contact rolling bearing (721) consists of a spherical bearing (721) selected from the spherical roller bearings or spherical friction bearing.

4. The crane according to any one of claims 1 to 3, **characterized in that** the rolling elements (711) are carried by the carrier frame (6), and
**in that** the cylindrical raceway (712) is carried by the pedestal (5) and is directed towards the axis of rotation (6').

5. The crane according to any one of claims 1 to 4, **characterized in that** the lower bearing means (72) have a spherical central point (C3), so as to obtain a single point of articulation.

6. The crane according to any one of claims 1 to 5, **characterized in that** the rotation operating means (8) are implanted at the lower bearing means (72).

7. The crane according to any one of claims 1 to 6, **characterized in that** said crane (1) is a land crane or an offshore crane.

8. A craft for offshore application, equipped with a crane (1) according any one of claims 1 to 7, for example a wind farm Service Operation Vessel.

9. The craft according to claim 8, consisting of a vessel, in which the pedestal (5) is fastened to a deck (P) of said craft (E), projecting above said deck (P),
in that the upper bearing means (71) are located above said deck (P),
and in that the lower bearing means (72) are located above, at or below said deck (P).
